Europäisches Patentamt

European Patent Office

Office européen des brevets

(11) Publication number: **0 213 250**
**A1**

# EUROPEAN PATENT APPLICATION

(21) Application number: 85630128.8

(22) Date of filing: 13.08.85

(51) Int. Cl.⁴: **B21D 39/04** , F16B 7/00 ,
//A01G9/14

The title of the invention has been amended (Guidelines for Examination in the EPO, A-III, 7.3).

(43) Date of publication of application:
**11.03.87 Bulletin 87/11**

(84) Designated Contracting States:
**AT BE CH DE FR GB IT LI LU NL SE**

(71) Applicant: **Cole, Stephen**
**Main Road**
**Goodnight New South Wales 2739(AU)**

(72) Inventor: **Cole, Stephen**
**Main Road**
**Goodnight New South Wales 2739(AU)**

(74) Representative: **Waxweiler, Jean et al**
**OFFICE DENNEMEYER S.à.r.l. P.O. Box 1502**
**L-1015 Luxembourg(LU)**

(54) **Method for connecting members and connection according to said method.**

(57) A connection (10) between members (12,14,16) includes ends (18,20) of two of the members (12,14) which are deformed such that the third member (16) may be located between the ends (18,20). The connection (10) is then completed by securing the ends (18,20) together using bolts (36,38) passing through registering apertures (28,30) in each end (18,20).

FIG. 1

## METHOD AND APPARATUS FOR CONNECTING MEMBERS

This invention relates to a system for connecting members, and is particularly applicable to tubular members such as pipes.

One type of greenhouse construction involves the use of a frame, over which is stretched polythene sheeting. The frame is usually constructed from tubular metal members, but the preparation of the frame members and the construction of the frames on site, particularly if the frame elements are riveted together, is time-consuming and, as a result, costly.

It is an object of the present invention to provide a system for connecting members such as frame members, which connection may be quickly and securely made.

The invention provides a method for connecting members characterized by the steps of: deforming at least a portion of a first member, deforming at least a portion of a second member, and securing said portions together about a third member.

The invention also provides a connection between members, characterized in that a first member has a portion thereof deformed, a second member has a portion thereof deformed, and in that said members are connected together such that said deformed portions clamp a third member therebetween.

A preferred embodiment of the invention will be described in detail hereinafter with reference to the accompanying drawings, in which:-

Fig. 1 is a perspective view of a connection between three tubular frame members;

Fig. 2 is a side elevation of the connection of Fig. 1 showing the members slightly separated;

Fig. 3 is a cross-section along the lines 3-3 of Fig. 2;

Fig. 4 is a plan view of the connection of Fig. 1;

Fig. 5 is a perspective view of one end of one frame member;

Fig. 6 is a side elevation of a greenhouse frame; and

Fig. 7 is a side elevation of a larger greenhouse frame.

The connection 10 is made between three tubular frame members 12,14,16. In this embodiment, the members are each 25.4 mm diameter steel pipe, although other sizes (such as 31.7 mm diameter steel pipe) or other metals (such as aluminium) or materials may be used. The members 12,14,16 have a circular cross-section, but it will become clear that the invention is also capable of application to members having a non-circular cross-section.

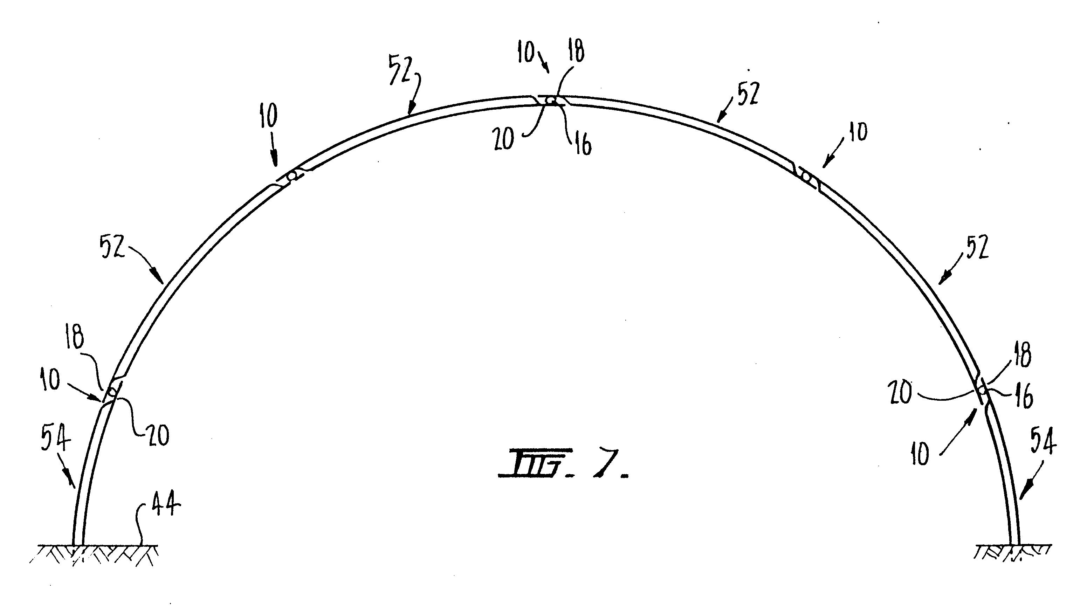

Members 12,14,16 may be straight or curved. In this embodiment, members 12,14 are curved supporting frame members 48 for a greenhouse, and member 16 is a straight cross-member (see Fig. 6).

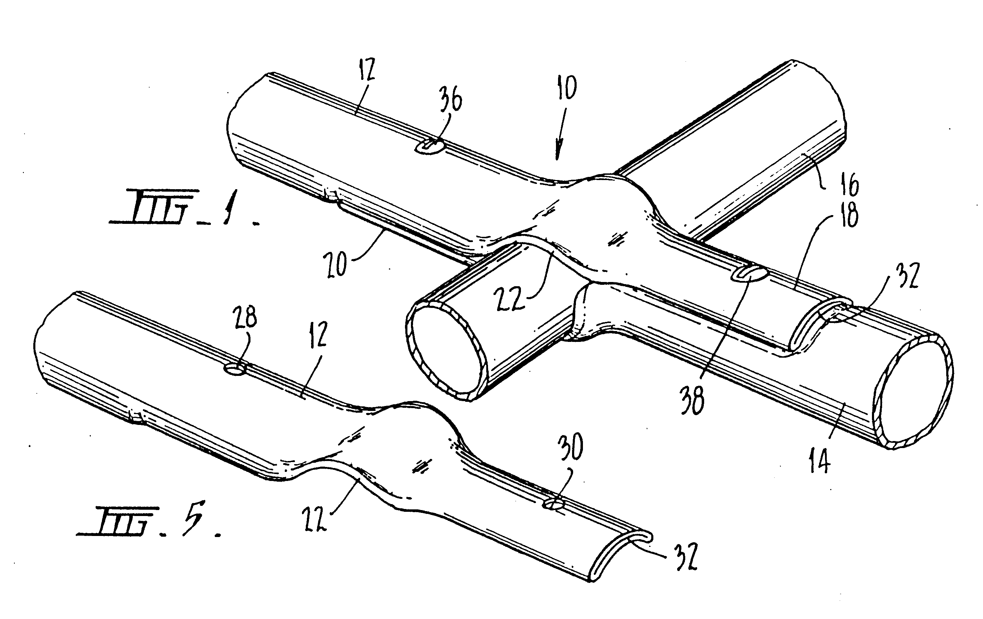

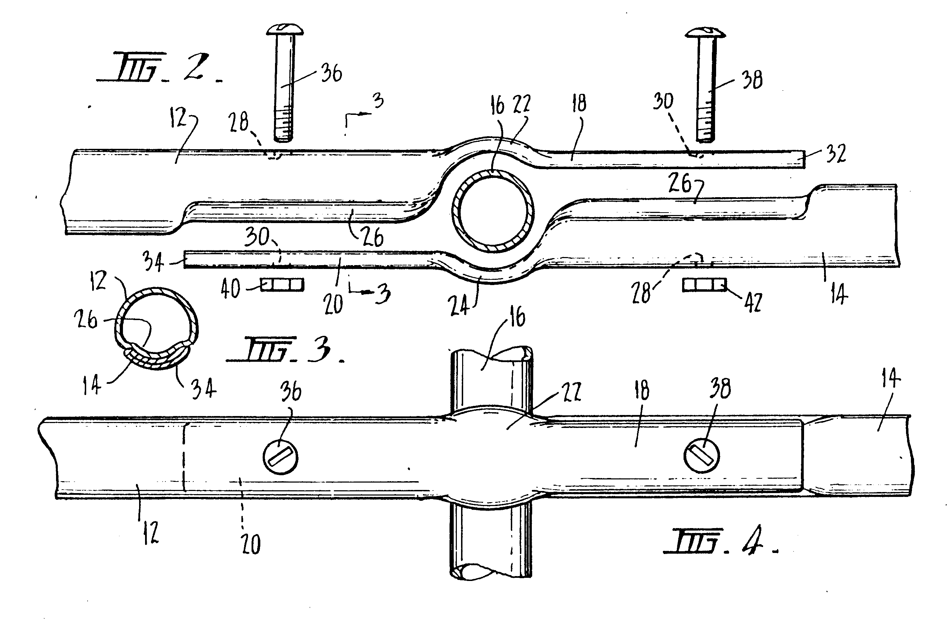

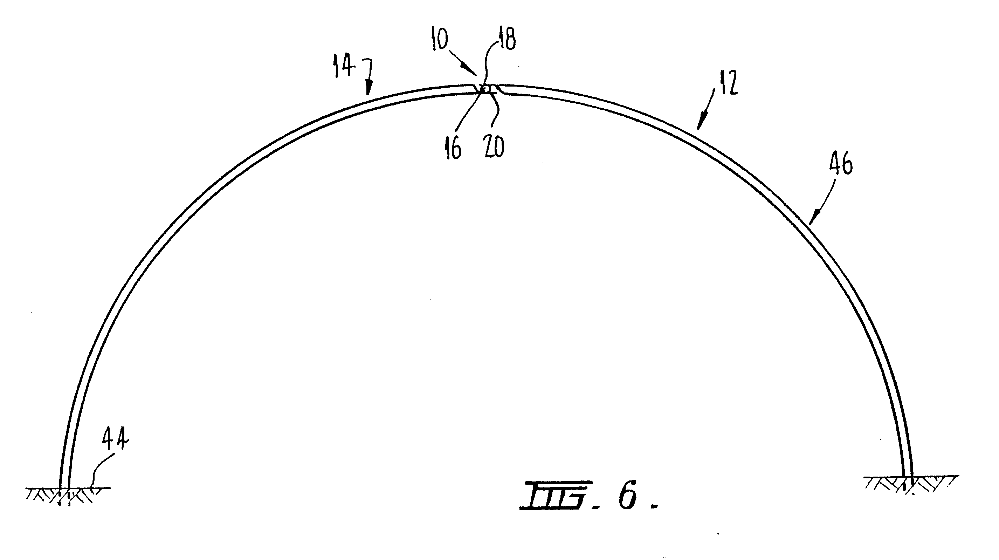

The ends 18,20 of members 12,14 are deformed, in that lengths of each member at the ends 18,20 are pressed or otherwise deformed into the crescent (in cross-section) profiles 32,34 which are illustrated in Figs. 3 and 5. A second deformation is made in each end 18,20 to provide curved profiles 22, 24 at, in this embodiment, right angles to the axis of each member. The second deformations could be made at other angles to the axes of the members 12,14. The deformation steps may also include a minor deformation 26 of each end on the inner side of deformations 22, 24 to provide a smoother external appearance for the connection 10. Deformation 26 is best illustrated in Fig. 3.

A pair of apertures 28,30 is provided in each end 18,20 or may be drilled in situ. When located in a clamping position as shown in Fig. 2, apertures 28,30 of members 12,14 are in register. Bolts 36,38 are adapted to be passed through registering apertures 36,38. Cross-member 16 is located between members 12,14 within profiles 22,24 before the bolting action takes place, with nuts 40,42 being tightened on bolts 36,38 to draw ends 18,20 together, thereby securely clamping member 16 therebetween.

In Fig. 6, the other ends of members 12,14 are located in the ground 44, preferably by sinking a section of larger diameter tube in the ground, and locating the other end of the members therein, and their other ends 18,20 are secured by connection 10 in the correct position. Obviously, in a complete greenhouse, there would be a number of complete frame 'hoops' 46, located in the ground, and connected by cross members 16. Polythene sheeting - (not shown) is then secured over the frame so constructed, to complete the structure.

The 'hoop' 46 of Fig. 6 is preferably dimensioned so that it is 1.98 m from the ground at its highest point, and is 4.26 from base to base.

Fig. 6 shows a larger greenhouse 'hoop' 50, having dimensions of a maximum height of 3.2 m and a width of 6.71 m.

In this Figure, hoop elements 52,54, made from 31.7 mm steel tube, are used. Elements 52 are 'full', in that they have ends 18 and 20. These make three connections 10, and two further connections are made with 'half' elements 54, which only have one deformed end 18 or 20.

It has been found that the connection 10 of this embodiment is extremely strong, and provides a firm, rigid connection between the members 12,14 and 16. Its flattened external shape is suitable for the location of polythene sheet thereon, in a greenhouse application. Of course, the connection 10 may be used for other structures, such as other type buildings, scaffolding or fencing, or for any other application where members are to be joined. Clearly the deformation of the members need not take place at the very ends thereof, although it seems likely that the deformation may have to occur near the ends.

## Claims

1. A method for connecting members characterized by the steps of: deforming at least a portion of a first member, deforming at least a portion of a second member, and securing said portions together about a third member.

2. A method according to claim 1, characterized by said portions being near ends of said first and second members.

3. A method according to claim 1 or 2 characterized by said deformation including a generally longitudinal deformation and a generally transverse deformation.

4. A method according to any preceding claim, characterized by said members being secured by bolts.

5. A method according to any preceding claim, characterized by said members being tubular members such as pipes.

6. A connection between members, characterized in that a first member has a portion thereof deformed, a second member has a portion thereof deformed, and in that said members are connected together such that said deformed portions clamp a third member therebetween.

7. A connection according to claim 6, characterized in that said portions are near ends of said first and second members.

8. A connection according to claim 6 or 7, characterized in that each deformation includes a generally longitudinal deformation and a generally transverse deformation.

9. A connection according to any one of claims 6 to 8 characterized in that said members are secured by bolts.

10. A connection according to any one of claims 6 to 9, characterized in that said members are tubular members such as pipes.

FIG. 1.

FIG. 2.

FIG. 2.

36

3

12    28    16 22    18    30    38

32

26

26    30    34    20    24    28    14

12    26    14    34    36

40    20    3    28    42

FIG. 3.

16

12    22    18    38    14

20

FIG. 4.

0 213 250

10  18

14

12

46

16  20

0 213 250

44

𝕱𝕴𝕲. 6.

FIG. 7.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | NL-A-6 404 511 (CRUSON PATENTS) * Page 3, line 19 - page 4, line 17; figures 1-3 * | 1-10 | B 21 D 39/04 F 16 B 7/00 // A 01 G 9/14 |
| | --- | | |
| A | US-A-2 881 017 (MILLAR) | | |
| | --- | | |
| A | US-A-2 408 907 (BOOTH) | | |
| | --- | | |
| E | DERWENT ABSTRACT, nr. 85-249396, Week 8541; & AU - A - 85 38 739 (COLE) | | |
| | ----- | | |

TECHNICAL FIELDS SEARCHED (Int. Cl.4)

A 01 G
B 21 D
E 04 B
F 16 B

The present search report has been drawn up for all claims

| Place of search | Date of completion of the search | Examiner |
|---|---|---|
| THE HAGUE | 26-03-1986 | VAN DER WAL W |

EPO Form 1503 03 82